# EUROPÄISCHE PATENTANMELDUNG

(11) **EP 2 626 824 A1**
(43) Veröffentlichungstag der Anmeldung: **14.08.2013**
(21) Anmeldenummer: 12075012.0
(22) Anmeldetag: 09.02.2012
(51) Int. Cl.: G06Q 20/32, G06Q 20/22, G06Q 20/36, H04L 29/08

(54) **Management durch ein mobiles Endgerät bereitgestellter virtueller Brieftaschen**

(71) Anmelder: Deutsche Telekom AG, 53113 Bonn (DE)
(72) Erfinder: Ren, Zhiyun, 12357 Berlin (DE); Heuer, Jörg, 14163 Berlin (DE); Yin, Ming, 12203 Berlin (DE); Hoffmann, Klaus-Peter, 12205 Berlin (DE)
(74) Vertreter: Brandt, Detlef

(57) **Zusammenfassung**

Mit einem mobilen Endgerät (1), beispielsweise einem Mobiltelefon nutzbare virtuelle Brieftaschen, so genannte Mobile Wallets, werden durch eine Kombination eines hardwarebasierten Sicherheitselements (2, 2') mit einer softwarebasierten Wallet-Anwendung gebildet. Das Sicherheitselement (2, 2'), beispielsweise die SIM-Karte oder eine in den Chipsatz des Mobiltelefons integrierte Javacard, dient insbesondere der Identifikation bei mittels diesem auszuführenden Bezahl- oder Transaktionsvorgängen. Die Architektur heutiger mobiler Endgeräte ist üblicherweise so gestaltet, dass jeweils immer nur ein Sicherheitselement (2, 2') von gegebenenfalls mehreren aktiv sein kann. Dieses muss jeweils vom Nutzer in Abhängigkeit der auszuführenden Transaktion durch entsprechende Bedienung des Endgerätes ausgewählt werden.

Gemäß dem vorgeschlagenen Verfahren wird bei der Verwendung unterschiedlicher virtueller Brieftaschen gewährleistet, dass alle von einem mobilen Endgerät (1) bereitgestellten virtuellen Brieftaschen, unabhängig von dem jeweils mit ihnen verknüpften Sicherheitselement (2, 2') durch eine einheitliche Wallet-Anwendung (3) dargestellt werden, welche auf das jeweils zu verwendende Sicherheitselement (2, 2') direkt über eine Hardwaresteuerungsschnittstelle (8) oder über eine sicherheitselementspezifische Wallet-Anwendung (8, 8') zugreift.

## Beschreibung

Die Erfindung betrifft ein Verfahren für das Management virtueller Brieftaschen, so genannter Mobile Wallets beziehungsweise E-Wallets, welche bargeldlose Bezahlvorgänge und damit vergleichbare geschäftliche beziehungsweise monetäre oder auch sicherheitsrelevante Transaktionsvorgänge unter Nutzung eines mobilen Endgeräts ermöglichen. Bei den sicherheitsrelevanten Transaktionsvorgängen handelt es sich in diesem Zusammenhang beispielsweise um die Schlüsselverwaltung für kryptographische Anwendungen oder um Transaktionsvorgänge für den Zugang zu geschützten Informationen beziehungsweise den Zutritt zu geschützten Bereichen mit Zugangskontrolle.

Bei einem solchen Mobile Wallet handelt es sich um ein aus einer Kombination von Hardware und Software gebildetes Modul innerhalb eines mobilen Endgeräts, wie beispielsweise eines Mobiltelefons oder eines Smartphones. Das vorgenannte Modul besteht im Wesentlichen aus zwei Komponenten, nämlich einem hardwarebasierten Sicherheitselement und einer von einer Verarbeitungseinheit des mobilen Endgeräts ausführbaren, softwarebasierten Wallet-Anwendung. Dabei dient das Sicherheitselement insbesondere der Identifikation bei mittels des entsprechenden mobilen Endgeräts auszuführenden Bezahl- oder Transaktionsvorgängen. Bei dem Sicherheitselement handelt es sich beispielsweise um die SIM-Karte eines Mobiltelefons oder eine andere von dem mobilen Endgerät aufgenommenen Chipkarte, wie eine UICC (Universal Integrated Circuit Card = universelle Karte mit integriertem Schaltkreis). Darüber hinaus kann es sich aber bei dem Sicherheitselement auch um eine in den Chipsatz des mobilen Endgeräts beziehungsweise des Mobiltelefons integrierte Javacard handeln. Auf den Sicherheitselementen beziehungsweise Chipkarten befinden sich Applets, mittels derer das Handling zur Identifikation dienender Informationen oder Schlüssel und auf der Chipkarte gehaltener verschlüsselter Daten erfolgt. Diese Applets - im Zusammenhang mit Java spricht man, gewissermaßen unter Zusammenziehung der Begriffe "Karte" und "Applet" auch von Java Cardlets - können einerseits durch die zugehörige Wallet-Anwendung und andererseits bei der Durchführung von Bezahlvorgängen an Akzeptanzstellen, insbesondere am Point of Sale (PoS) drahtlos, nämlich im Wege funkgestützter Nahfeldkommunikation (NFC = Near Field Communication) angesprochen werden.

Durch die mit dem Sicherheitselement eines Mobile Wallet zusammenarbeitende Software (Wallet-Anwendung) wird die virtuelle Brieftasche für einen das mobile Endgerät verwendenden Nutzer in entsprechender Form (vorzugsweise in graphischer Form auf einem Display) dargestellt. Ferner werden unter Verwendung des entsprechenden Mobile Wallet beziehungsweise einer virtuellen Brieftasche ausgeführte bargeldlose Bezahlvorgänge oder Transaktionsvorgänge durch die Software unter Zugriff auf das zugehörige Sicherheitselement gesteuert. Ein in der zuvor dargestellten Weise ausgebildetes Mobile Wallet wird beispielsweise durch die EP 2 369 543 A1 beschrieben.

Durch viele mobile Endgeräte, wie insbesondere moderne Smartphones, können mehrere derartiger virtueller Brieftaschen verwaltet werden, wobei sich diese durch das jeweils verwendete Sicherheitselement unterscheiden. So können Smartphones neben einer SIM-Karte eines Mobilfunkproviders teilweise zumindest eine weitere Chipkarte (zum Beispiel SD-Card mit erweiterter Funktionalität) aufnehmen. Darüber hinaus ist häufiger die Integration entsprechender Funktionalitäten (insbesondere oben genannter Applets), vorzugsweise in Form einer Javacard, in dem Chipsatz des mobilen Endgeräts anzutreffen.

Andererseits sind die bargeldlosen Bezahlsysteme beziehungsweise Transaktionssysteme unterschiedlicher Anbieter zumeist nur auf eines der vorgenannten Sicherheitselemente ausgelegt. So kann beispielsweise ein Ticketing-System, bei welchem Zugtickets oder Theatertickets durch bargeldlose Bezahlung mittels des mobilen Endgeräts erworben werden können, die SIM-Karte von Mobiltelefonen beziehungsweise Smartphones als hardwarebasiertes Sicherheitselement verwenden. Dagegen greifen beispielsweise Kreditkartengesellschaften, welche eine bargeldlose Bezahlung mittels mobilen Endgeräten unterstützen, vielleicht auf eine in deren Chipsatz integrierte Javacard zurück. Die Architektur heutiger mobiler Endgeräte ist jedoch üblicherweise so gestaltet, dass jeweils immer nur ein Sicherheitselement von gegebenenfalls mehreren Sicherheitselementen aktiv sein kann, also nicht gleichzeitig auf mehrere Sicherheitselemente zugegriffen werden kann. Hierbei gibt es jeweils eine softwarebasierte Wallet-Anwendung, welche unter Bildung eines Mobile Wallet mit dem jeweiligen Sicherheitselement zusammenarbeitet beziehungsweise für dieses zuständig ist. Dies bedeutet aber, dass der Nutzer eines mit mehreren Mobile Wallets ausgestatteten mobilen Endgeräts bei einer Akzeptanzstelle für mittels des betreffenden Endgeräts durchzuführende bargeldlose Bezahlvorgänge oder Transaktionen beziehungsweise am Point of Sale das von dem betreffenden Anbieter einer bargeldlosen Zahlung jeweils unterstützte Mobile Wallet auf seinem mobilen Endgerät selbst auswählen, insbesondere aber dessen zugehöriges Sicherheitselement aktivieren muss. Er kann sich dabei zwar teilweise durch User Interfaces (UI's) unterstützen lassen, welche die in dem von ihm verwendeten mobilen Endgerät verfügbaren Sicherheitselemente auflisten. Unter Rückgriff auf die entsprechende Liste kann er dann das jeweils zutreffende Sicherheitselement und damit das für einen Bezahlvorgang zu verwendende Mobile Wallet auswählen, wobei er aber das Sicherheitselement selbst durch entsprechende Bedienvorgänge aktivieren muss. Dabei ist die Handhabung mehrerer verschiedener Mobile Wallets auf einem mobilen Endgerät für den Nutzer trotz der vorgenannten Unterstützung häufig schwierig zu verstehen. Gegebenenfalls muss der Nutzer dabei auch mehrere der auf seinem mobilen Endgerät gehaltenen Mobile Wallets erst durchsuchen, um festzustellen, von welchem beispielsweise die an einem Point of Sale akzeptierten bargeldlosen Zahlungsmittel verwaltet werden. Da für die betreffende Akzeptanzstelle nur das über NFC jeweils gerade aktive Sicherheitselement und die darauf befindlichen virtuellen Objekte, wie beispielsweise virtualisierte Zahlungsmittel, sichtbar sind, muss der Nutzer zudem gegebenenfalls noch von einem Mobile Wallet auf das andere, die entsprechenden virtuellen Objekte, wie beispielsweise bargeldlose Zahlungsmittel, enthaltende Mobile Wallet umschalten. Damit sind die Nutzer jedoch nicht selten überfordert.

Der Erfindung liegt die Aufgabe zugrunde, die vorgenannten Nachteile zu vermeiden. Die Aufgabe besteht insbesondere darin, eine Lösung anzugeben, welche dem Nutzer eines mit verschiedenen virtuellen Brieftaschen ausgestatteten mobilen Endgeräts eine flexible Handhabung dieser Brieftaschen ermöglicht, insbesondere ohne dass er sich im Zusammenhang mit einem Bezahl- oder Transaktionsvorgang Gedanken darüber machen muss, durch welche dieser virtuellen Brieftaschen das für den entsprechenden Vorgang jeweils benötigte virtuelle Objekt, wie beispielsweise ein bargeldloses Zahlungsmittel, verwaltet wird und wie er das zugehörige hardwarebasierte Sicherheitselement beim Umschalten auf die entsprechende virtuelle Brieftasche aktivieren kann.

Die Aufgabe wird durch ein Verfahren mit den Merkmalen des Patentanspruchs 1 gelöst. Vorteilhafte Aus- beziehungsweise Weiterbildungen der Erfindung sind durch die Unteransprüche gegeben.

Das zur Lösung der Aufgabe vorgeschlagene Verfahren geht grundsätzlich von dem eingangs bereits beschriebenen Verständnis eines Mobil Wallet aus. Demnach handelt es sich dabei um eine - im Weiteren auch nur noch so bezeichnete - virtuelle Brieftasche, welche unterschiedliche virtuelle Objekte, wie insbesondere bargeldlose Zahlungsmittel, aufnimmt und über diese virtuellen Objekte verfügbare Ressourcen, wie beispielsweise Geldbeträge, in Form sie repräsentierender Daten verwaltet. Ferner werden durch eine von einem mobilen Endgerät bereitgestellte virtuelle Brieftasche zur Ausführung bargeldloser Bezahlvorgänge oder anderer Transaktionsvorgänge der eingangs genannten Art entsprechende, Ressourcen repräsentierende Daten an andere, für den Empfang dieser Daten und deren Weiterverarbeitung ausgebildete elektronische Geräte übertragen. Schließlich gehören zu dem Gesamtsystem, in welches eine entsprechende virtuelle Brieftasche einbezogen ist, noch entsprechende Backendsysteme, der Ausgeber durch die virtuellen Brieftaschen aufzunehmender virtueller Objekte, wie bargeldloser Zahlungsmittel, beziehungsweise von Betreibern entsprechender bargeldloser Bezahlsysteme oder Transaktionssysteme. Bei diesen Backendsystemen, welche nicht Gegenstand der vorliegenden Erfindung sind und daher hier nicht näher betrachtet werden sollen, handelt es sich beispielsweise um die Computersysteme von Kreditkartengesellschaften, welche sich am bargeldlosen Zahlungsverkehr, insbesondere am Zahlungsverkehr mittels virtueller Zahlungsmittel beteiligen, oder um Server von Dienstleistern, die ihre Dienstleistungen durch Abwicklung sicherheitsrelevanter oder geldwerter Transaktionsvorgänge, wie beispielsweise des so genannten Ticketing, erbringen. Durch die betreffenden Backendsystem erfolgen beispielsweise auch die Verbuchung von Zahlungsvorgängen und beispielsweise die Saldenermittlung für virtualisierte, durch die virtuellen Brieftaschen aufgenommene Kreditkarten.

Bei komplexen Geschäftsvorgängen, wie beispielsweise dem vorgenannten Ticketing, kann einem unter Verwendung des mobilen Endgeräts erfolgenden Transaktionsvorgang - hier die Nutzung des mobilen Endgeräts beziehungsweise Mobiltelefons als Eintrittskarte oder Zugfahrkarte - ,bei welchem das mobile Endgerät Daten zur Überprüfung der Gültigkeit eines geldwerten Tickets an ein entsprechendes elektronisches Gerät überträgt, der eigentliche Bezahlvorgang gewissermaßen vorgelagert sein. Dennoch stellt die Nutzung des Tickets und die Übertragung der Daten zur Überprüfung seiner Gültigkeit einen mit einem bargeldlosen Bezahlvorgang unter Einsatz einer virtuellen Kreditkarte vergleichbaren Transaktionsvorgang dar. Im Hinblick auf das zuvor angegebene Beispiel ist es dabei sogar denkbar, dass ein entsprechendes Ticket unter Einsatz eines in einer ersten virtuellen Brieftasche des mobilen Endgeräts gehaltenen bargeldlosen Zahlungsmittels, welches mit einer Kreditkarte assoziiert ist, erworben wird und dann als Credential beziehungsweise virtuelles Ticket durch eine andere, von demselben mobilen Endgerät bereitgestellte virtuelle Brieftasche aufgenommen wird. Dabei stellen nach diesem Verständnis entsprechende Credentials oder auch Gutscheine und dergleichen virtuelle Objekte dar, welche vergleichbar bargeldlosen Zahlungsmitteln durch jeweils eine der durch das mobile Endgerät bereitgestellten virtuellen Brieftaschen aufgenommen werden können. Über bargeldlose Zahlungsmittel verfügbare Geldbeträge und sonstige in den virtuellen Brieftaschen verwaltete Ressourcen umfassen nach diesem Verständnis auch solche Daten, welche zum Beispiel im Zusammenhang mit dem Erwerb oder dem Einsatz von Gutscheinen oder Rabatten beziehungsweise zur Realisierung von Rückvergütungssystemen unter Einbeziehung des entsprechenden mobilen Endgeräts an andere elektronische Geräte übertragen werden.

An dieser Stelle sei angemerkt, dass unter einem (im Rahmen des erfindungsgemäßen Verfahrens genutzten) mobilen Endgerät, soweit nicht anders angegeben, ausschließlich ein mobiles Endgerät (zum Beispiel Mobiltelefon, Smartphone oder Tablet-PC) verstanden werden soll, durch welches virtuelle Brieftaschen bereitgestellt werden. Zur Unterscheidung werden andere, in bargeldlose Bezahlvorgänge Transaktionsvorgänge einbezogene Geräte, wie beispielsweise eine am Point of Sale zur Abwicklung bargeldloser Bezahlvorgänge im Wege der Near Field Communication genutzte Kasseneinrichtung, allgemein als elektronische Geräte bezeichnet.

Jede der von dem mobilen Endgerät bereitgestellten Brieftaschen besteht nach dem der Erfindung zugrunde liegenden Verständnis jeweils aus einem der Identifikation bei Bezahl- oder anderen Transaktionsvorgängen dienenden, mit dem mobilen Endgerät verbundenen hardwarebasierten Sicherheitselement und einer softwarebasierten Wallet-Anwendung. Durch Letztere werden insbesondere die durch das mobile Endgerät bereitgestellten virtuellen Brieftaschen für die Interaktion mit einem sie verwendenden Nutzer dargestellt und bargeldlose Bezahlvorgänge und Transaktionsvorgänge unter Zugriff auf das zu der dabei jeweils verwendeten virtuellen Brieftasche gehörige Sicherheitselement gesteuert. Bei dieser Wallet-Anwendung handelt es sich um eine von einer Verarbeitungseinheit des betreffenden mobilen Endgeräts ausführbare Software, wobei jeder Tablet-PC und jedes Smartphone über einen Prozessor verfügt, welcher vorzugsweise in diesem Zusammenhang als eine solche Verarbeitungseinheit fungiert.

Das zu einer virtuellen Brieftasche gehörende hardwarebasierte Sicherheitselement kann, wie bereits eingangs erwähnt, unterschiedliche Ausprägungen haben. Es handelt sich hierbei um eine von einem Smartphone aufgenommene SIM-Karte, eine UICC oder eine sonstige von dem mobilen Endgerät aufgenommene Chipkarte oder aber gegebenenfalls auch um mindestens ein entsprechendes, in den Chipsatz des mobilen Endgeräts integriertes Funktionselement. In jedem Falle ist ein solches Sicherheitselement auch mit einer Firmware beziehungsweise einem Applet oder Cardlet ausgestattet, durch welche die Interaktion mit einer zugehörigen Wallet-Anwendung ermöglicht ist. Die betreffende Wallet-Anwendung weist dabei eine Hardwaresteuerungsschnittstelle für den physikalischen Zugriff auf das entsprechende Sicherheitselement auf. Die Kommunikation zwischen der Wallet-Anwendung und dem Sicherheitselement, nämlich der Austausch entsprechender, für die Funktion der virtuellen Brieftasche relevanter Daten erfolgt dabei nach derzeitigem Stand unter Nutzung von durch das entsprechende Sicherheitselement unterstützten Java-Anwendungen, den genannten Java Cardlets.

Entsprechend dem zur Lösung der Aufgabe vorgeschlagenen Verfahren wird eine Entlastung eines virtuelle Brieftaschen mittels seines mobilen Endgeräts beziehungsweise Smartphones verwendenden Nutzers und eine Erhöhung des Komforts bei der Verwendung unterschiedlicher virtueller Brieftaschen und damit unterschiedlicher Sicherheitselemente dadurch gewährleistet, dass alle von dem betreffenden mobilen Endgerät bereitgestellten virtuellen Brieftaschen durch eine einheitliche softwarebasierte Wallet-Anwendung dargestellt werden, und zwar unabhängig von dem mit einer jeweiligen virtuellen Brieftasche jeweils verknüpften Sicherheitselement. Diese einheitliche Wallet-Anwendung soll im Weiteren vereinfachend als Multi-Wallet bezeichnet werden, so dass in den nachfolgenden Erläuterungen zur Erfindung der Begriff "Multi-Wallet" synonym zu dem in den Patentansprüchen ausschließlich verwendeten Begriff "einheitliche Wallet-Anwendung" steht. Die entsprechende, vorzugsweise visuelle Darstellung der Brieftaschen mittels dieses Multi-Wallet umfasst hierbei auch die Verwaltung in diesen Brieftaschen enthaltener virtueller Objekte und über diese Objekte verfügbarer Ressourcen.

Gemäß einer ersten grundsätzlichen Variante des Verfahrens greift das vorgenannte Multi-Wallet, also die bezüglich aller Brieftaschen beziehungsweiser aller Sicherheitselemente einheitliche Wallet-Anwendung, auf das Sicherheitselement einer für einen Bezahl- oder Transaktionsvorgang verwendeten virtuellen Brieftasche direkt über eine, bezogen auf die von dem mobilen Endgerät unterstützten Sicherheitselemente universelle Hardwaresteuerungsschnittstelle zu. Gemäß einer zweiten grundsätzlichen Variante erfolgt der bei einem Bezahl- oder Transaktionsvorgang erforderliche Zugriff auf das Sicherheitselement der dafür verwendeten virtuellen Brieftasche über eine für das jeweilige Sicherheitselement spezifisch ausgelegte Wallet-Anwendung, wobei das Multi-Wallet und die vorgenannte sicherheitselementspezifisch ausgelegte Wallet-Anwendung über eine gemeinsame Programmierschnittstelle interagieren und die sicherheitselementspezifische Wallet-Anwendung über eine Hardwaresteuerungsschnittstelle für den Zugriff auf das betreffende Sicherheitselement verfügt. Die zuletzt genannte bezüglich eines Sicherheitselements spezifisch ausgelegte Wallet-Anwendung eines Anbieters einer Lösung für eine virtuelle Brieftasche beziehungsweise die entsprechende, an ein spezifisches Sicherheitselement gebundene Software soll im Weiteren vereinfachend und gewissermaßen im Gegensatz zum Multi-Wallet als Single-Wallet bezeichnet werden. In diesem Zusammenhang sei an dieser Stelle nochmals ausdrücklich darauf hingewiesen, dass es sich bei einem Mobil Wallet, also einer virtuellen Brieftasche, um ein aus zwei Komponenten, nämlich einer Hardwarekomponente (Sicherheitselement) und einer Softwarekomponente (Wallet-Anwendung) bestehendes Modul handelt, wohingegen die vereinfachend ebenfalls nur als Wallet, nämlich Multi-Wallet einerseits und Single-Wallet andererseits, bezeichneten Komponenten softwarebasierte, Anwendungen als Teil eines Multi-Wallet, das heißt einer virtuellen Brieftasche bezeichnen.

Gemäß einer vorteilhaften Ausgestaltung des erfindungsgemäßen Verfahrens werden Informationen zu unterschiedlichen virtuellen Brieftaschen und für deren graphische Darstellung in einer zu dem Multi-Wallet gehörenden Datenbank verwaltet, von welcher diese Informationen auch mit Angaben zu einem jeweiligen, von der betreffenden virtuellen Brieftasche aufgenommenen virtuellen Objekt, wie insbesondere einem bargeldlosen Zahlungsmittel, verknüpft werden. Diese Ausführungsform ist dadurch vorteilhaft weitergebildet, dass die vorgenannte Datenbank durch den Nutzer des mobilen Endgeräts konfiguriert, administriert und aktualisiert werden kann. So kann der Nutzer beispielsweise Informationen zu neu in Umlauf gebrachten virtuellen Brieftaschen oder virtuellen Objekten für solche virtuellen Brieftaschen durch Anstoßen entsprechender Aktualisierungsvorgänge, bei denen eine Verbindung mit einem entsprechenden, diese Informationen bereitstellenden Portal aufgebaut wird und die betreffenden Informationen heruntergeladen werden, in die Datenbank aufnehmen.

Details der Erfindung sollen nochmals anhand von Zeichnungen erläutert werden. Die Zeichnungen zeigen:
- Fig. 1:: die schematische Darstellung eines virtuelle Brieftaschen bereitstellenden mobilen Endgeräts zur Erläuterung einer ersten grundsätzlichen Ausbildungsform der Erfindung,
- Fig. 2:: ein mit der Fig. 1 vergleichbares Schema zur Erläuterung einer weiteren grundsätzlichen Ausbildungsform der Erfindung.

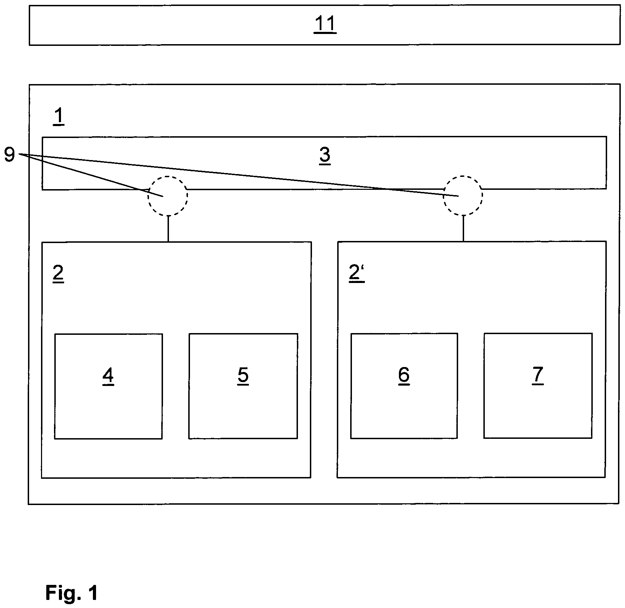

Die Fig. 1 betrifft die schematische Darstellung eines mobilen Endgeräts 1, zum Beispiel eines Mobiltelefons beziehungsweise Smartphones. Im Weiteren wird von einem Smartphone ausgegangen, durch welches mehrere Mobile Wallets beziehungsweise virtuelle Brieftaschen zur Verwendung bei bargeldlosen Bezahlvorgängen beziehungsweise bei Transaktionsvorgängen bereitgestellt werden. Dabei beschränkt sich die Figur auf eine symbolische Darstellung der im Hinblick auf den Gegenstand der Erfindung wesentlichen Komponenten des betreffenden Smartphones 1, nämlich der Hard- und Softwarekomponenten der durch das Smartphone 1 bereitgestellten virtuellen Brieftaschen. Diese, in der Zeichnung symbolisch veranschaulichten Komponenten betreffen sowohl softwarebasierte als auch hardwarebasierte Komponenten. In der Figur ist zudem ein elektronisches Gerät 11 an einer Akzeptanzstelle eines Point of Sale (PoS) symbolisch dargestellt, durch welche bargeldlose Bezahl- beziehungsweise Transaktionsvorgänge unterstützt und akzeptiert werden, die im Wege eines Datenaustausches zwischen dem mobilen Endgerät 1 und dem elektrischen Gerät 11 unter Nutzung der Near Field Communication (NFC) erfolgen. Durch das beispielhaft symbolisch veranschaulichte Smartphone 1 werden zwei virtuelle Brieftaschen bereitgestellt, wobei durch das Smartphone 1 gegebenenfalls selbstverständlich auch eine größere Zahl von virtuellen Brieftaschen bereitgestellt werden kann. Die virtuellen Brieftaschen sind vorzugsweise zur Aufnahme unterschiedlicher virtueller Objekte 4, 5, 6, 7, wie bargeldloser Zahlungsmittel, ausgebildet. So werden beispielsweise durch das erste, in der Figur links dargestellte hardwarebasierte Sicherheitselement 2 beziehungsweise durch die mit ihm realisierte virtuelle Brieftasche unterschiedliche virtuelle Objekte 4, 5, wie beispielsweis bargeldlose Zahlungsmittel in Form unterschiedlicher Kreditkarten, aufgenommen, welche zum Zweck der Identifikation bei Bezahl- beziehungsweise Transaktionsvorgängen durch das betreffende Sicherheitselement 2 virtualisiert werden. Bei dem anderen hardwarebasierten Sicherheitselement 2' (rechts in der Darstellung) kann es sich beispielsweise um den Teil einer virtuellen Brieftasche handeln, welche in ein Ticketing-System eingebunden ist und entsprechende, unter Nutzung dieses Ticketing-Systems erworbene Tickets als geldwerte virtuelle Objekte 6, 7 und insoweit gewissermaßen ebenfalls bargeldlose Zahlungsmittel beziehungsweise mit solchen Zahlungsmitteln gleichzusetzende Mittel aufnimmt.

Nach dem Stand der Technik müsste der Nutzer des Smartphones 1 für einen bargeldlosen Bezahlvorgang beziehungsweise eine Transaktion jeweils die dafür verwendbare, durch eine spezielle Wallet-Anwendung, also ein Single-Wallet, visualisierte virtuelle Brieftasche auswählen und das zugehörige Sicherheitselement 2, 2' aktivieren. Dies würde aber bedeuten, dass der Nutzer, wenn er zuletzt einen bargeldlosen Bezahlvorgang mittels seines Smartphones 1 unter Verwendung einer mit dem ersten, links dargestellten Sicherheitselement 2 assoziierten Kreditkarte 4, 5 durchgeführt hat, im Falle dessen, dass er nun das Smartphone 1 für den Eintritt bei einer Konzertveranstaltung mittels eines mit dem rechten Sicherheitselement 2 assoziierten virtuellen Tickets 6, 7 nutzen will, sich zunächst klar darüber sein müsste, dass er sich vorliegend der virtuellen Brieftasche mit dem Zugriff auf das zweite, rechts dargestellte Sicherheitselement 2' bedienen muss, und dass er dieses Sicherheitselement 2' durch entsprechende Bedienvorgänge an dem Smartphone 1 aktivieren muss.

Dies ist jedoch durch den Einsatz der erfindungsgemäßen Lösung entbehrlich. Wie in der Figur veranschaulicht, weist dazu das Smartphone 1 des Nutzers ein Multi-Wallet 3, nämlich eine auch im Hinblick auf unterschiedliche Sicherheitselemente 2, 2'einheitliche softwarebasierte Wallet-Anwendung, auf. Dieses Multi-Wallet 3 greift bei einem bargeldlosen Bezahlvorgang beziehungsweise bei einem Transaktionsvorgang selbstständig auf das hierfür zu verwendende Sicherheitselement 2, 2' zu. Dafür verfügt das Multi-Wallet 3 über eine universelle Hardwaresteuerungsschnittstelle 9, über welche unterschiedliche Sicherheitselemente 2, 2' zur Realisierung einer Mehrzahl virtueller Brieftaschen eingebunden werden können. Der Anbieter eines bargeldlosen Bezahlsystems muss lediglich festlegen, mit Hilfe welches hardwarebasierten Sicherheitselements 2, 2' sich die Nutzer seines Systems bei Bezahl- beziehungsweise Transaktionsvorgängen identifizieren sollen. Der Hersteller des betreffenden Sicherheitselements 2, 2' wiederum muss dieses lediglich gemäß den Spezifikationen der Hardwaresteuerungsschnittstelle 9 des Multi-Wallet 3 gestalten beziehungsweise ein das Multi-Wallet 3 zur Verfügung stellendes Unternehmen muss lediglich bereits am Markt etablierte Hardwaresteuerungsschnittstellen 9 für entsprechende Sicherheitselemente 2, 2' in die entsprechende Software implementieren.

Die Abläufe für das Hinzufügen eines virtuellen Objektes 4, 5, 6, 7, wie eines bargeldlosen Zahlungsmittels (Karte, das heißt Kreditkarte, Kundenkarte, Rabattkarte, Ticket und dergleichen), zu einer virtuellen Brieftasche des Smartphones 1, für das Entfernen eines solchen virtuellen Objektes 4, 5, 6, 7, für dessen Aktivierung oder Deaktivierung und für die Nutzung des virtuellen Objektes 4, 5, 6, 7 gestalten sich dabei wie nachfolgend dargestellt.

### ● Hinzufügen eines virtuellen Objektes in eine virtuelle Brieftasche

1. Es wird ein neuer Dienst respektive ein neues virtuelles Objekt 4, 5, 6, 7, wie zum Beispiel ein bargeldloses Zahlungsmittel, auf eines der Sicherheitselemente 2, 2' geladen
2. Durch Funktionen des betreffenden Sicherheitselements 2, 2' (Cardlet) erhält das Multi-Wallet Kenntnis von dem neuen virtuellen Objekt 4, 5, 6, 7
3. Das Multi-Wallet 3 lädt die Informationen zur graphischen Darstellung des virtuellen Objektes 4, 5, 6, 7 von einem System (beispielsweise dem Backend-System) des Herausgebers, vorzugsweise "over the Air" nach und verknüpft diese in einer auf dem Smartphone 1 gespeicherten Datenbank mit der Anwendung (Applet) auf dem spezifischen Sicherheitselement 2, 2'.

### ● Entfernen eines virtuellen Objektes aus einer virtuellen Brieftasche

1. Der Nutzer wählt in dem Multi-Wallet 3 ein zu löschendes virtuelles Objekt 4, 5, 6, 7, wie eine Karte (zum Beispiel virtuelle Kreditkarte) beziehungsweise ein bargeldloses Zahlungsmittel, aus
2. Das Multi-Wallet 3 sendet eine Nachricht an das Backend-System des Herausgebers beziehungsweise der Betreibergesellschaft, dass das zu dem virtuellen Objekt 4, 5, 6, 7 beziehungsweise der Karte oder dem bargeldlosen Zahlungsmittel, gehörige Applet auf einem Sicherheitselement 2, 2' gelöscht werden soll
3. Sobald das Backend-System das Applet gelöscht hat, erfährt das Multi-Wallet 3 über Abläufe auf dem betreffenden Sicherheitselement 2, 2' (in Form eines Event-Mechanismus oder dergleichen) von der Entfernung des Applets
4. Das Multi-Wallet 3 entfernt dann die dazugehörige graphische Darstellung und die Verknüpfung mit dem zugehörigen Sicherheitselement 2, 2' aus seiner internen Datenbank.

### ● Aktivieren oder Deaktivieren eines virtuellen Objektes in einer virtuellen Brieftasche

1. Der Nutzer wählt mittels des Multi-Wallet 3 ein virtuelles Objekt 4, 5, 6, 7, beispielsweise ein bargeldloses Zahlungsmittel, zur Aktivierung oder Deaktivierung aus
2. Das Multi-Wallet 3 stellt über die interne Datenbank fest, mit welchem Sicherheitselement das betreffende virtuelle Objekt 4, 5, 6, 7 assoziiert ist
3. Das Multi-Wallet 3 selektiert dann zunächst das betreffende Sicherheitselement 2, 2', spricht dann die entsprechende Anwendung (Applet) an und sendet einen Befehl zur Aktivierung bzw. Deaktivierung des virtuellen Objektes 4, 5, 6, 7, beispielsweise des bargeldlosen Zahlungsmittels
4. Zudem wird das Sicherheitselement 2, 2' für die Nutzung am PoS aktiviert.

### ● Nutzung eines virtuellen Objektes an einer Akzeptanzstelle (PoS, Kartenleser)

1. Der Nutzer aktiviert zunächst das virtuelle Objekt 4, 5, 6, 7, beispielsweise das bargeldlose Zahlungsmittel, das er bei der folgenden Transaktion verwenden möchte
2. Der Nutzer hält das Smartphone 1 in NFC-Reichweite an den Kartenleser des elektronischen Geräts 11 des PoS, zum Beispiel einer Kasseneinrichtung.
3. Der PoS beziehungsweise die entsprechende Kasseneinrichtung 11 selektiert die gewünschte Anwendung (Applet) auf dem gerade aktiven Sicherheitselement 2, 2' und interagiert mit dieser, um die gewünschte Transaktion durchzuführen
4. Der Nutzer entfernt sein Smartphone 1 wieder von der Kasseneinrichtung 11 am PoS.

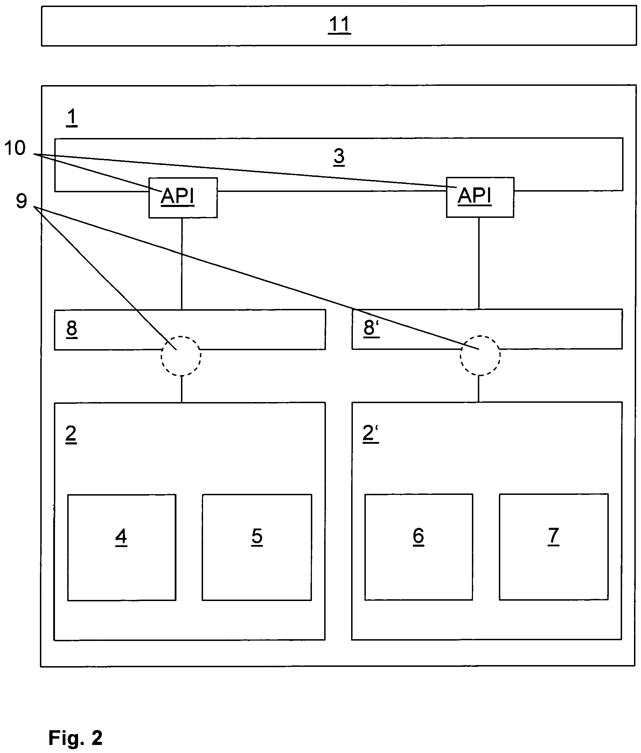

Die Fig. 2 zeigt in einer mit der Fig. 1 vergleichbaren schematischen Darstellung eine Konfiguration gemäß einer zweiten grundsätzlichen Ausbildungsform der Erfindung. Bei dieser Ausbildungsform ist, wie aus dem Stand der Technik bekannt, jedem Sicherheitselement 2, 2' eine auf dieses Sicherheitselement 2, 2' spezifisch zugeschnittene Wallet-Anwendung, das heißt ein Single-Wallet 8, 8', zugeordnet. Die Single-Wallets 8, 8'verfügen über eine standardisierte Programmierschnittstelle 10 (Application Programming Interface - API), über die sie mit dem übergeordneten Multi-Wallet 3 kommunizieren, und über jeweils eine Hardwaresteuerungsschnittstelle 9 für den Zugriff auf das zugehörige Sicherheitselement 2, 2'. Auch hier muss sich der Nutzer des Smartphones 1 bei dessen Verwendung für einen bargeldlosen Bezahl- oder Transaktionsvorgang keine Gedanken darüber machen, welche der durch sein Smartphone 1 bereitgestellten virtuellen Brieftaschen hierfür zu verwenden ist beziehungsweise welches der hardwarebasierten Sicherheitselemente 2, 2' demgemäß zu aktivieren ist. Dies wird vielmehr durch das Multi-Wallet 3 bewerkstelligt, durch welches alle von seinen verschiedenen virtuellen Brieftaschen aufgenommenen virtuellen Objekte 4, 5, 6, 7, wie bargeldlose Zahlungsmittel, zur entsprechenden Interaktion vorzugweise auf einem Display des Smartphones 1 dargestellt werden. Die Vorgänge des Hinzufügens oder Löschens beziehungsweise des Aktivierens oder Deaktivierens sowie der Nutzung einer Karte beziehungsweise eines virtuellen Objektes 4, 5, 6, 7, welches durch eine entsprechende virtuelle Brieftasche auf dem Smartphone 1 aufgenommen ist, gestalten sich dabei wie nachfolgend dargestellt.

### ● Hinzufügen eines virtuellen Objektes in eine virtuelle Brieftasche

1. Es wird ein neuer Dienst (beispielsweise eines Kartenanbieters) respektive ein neues virtuelles Objekt 4, 5, 6, 7, wie ein bargeldloses Zahlungsmittel, auf eines der Sicherheitselemente 2, 2' geladen
2. Durch Funktionen des betreffenden Sicherheitselements 2, 2' (Cardlet) erhält das zugehörige (sicherheitselementspezifische) Single-Wallet 8, 8' Kenntnis von dem neuen bargeldlosen Zahlungsmittel 4, 5, 6, 7
3. Das Single-Wallet 8, 8' lädt die Informationen zur graphischen Darstellung nach und verknüpft diese in einer auf dem Smartphone 1 gespeicherten Datenbank mit der Anwendung auf dem zugehörigen Sicherheitselement 2, 2'
4. Das Single-Wallet 8, 8' informiert zudem das übergeordnete Multi-Wallet 3 über das neue virtuelle Objekt 4, 5, 6, 7, wie beispielsweise ein neues bargeldloses Zahlungsmittel, so dass dieses die entsprechenden Informationen in seine eigene Datenbank übernehmen kann.

### ● Entfernen eines virtuellen Objektes aus einer virtuellen Brieftasche

1. Der Nutzer wählt in dem Multi-Wallet 3 ein zu löschendes virtuelles Objekt 4, 5, 6, 7, wie ein bargeldloses Zahlungsmittel beziehungsweise eine virtuelle Kreditkarte aus
2. Das Multi-Wallet 3 sendet eine Nachricht an das Backend-System des Herausgebers beziehungsweise der Betreibergesellschaft, dass das zu dem virtuellen Objekt 4, 5, 6, 7 gehörige Applet auf einem Sicherheitselement 2, 2' gelöscht werden soll
3. Sobald das Backend-System das Applet gelöscht hat, erfährt das Single-Wallet 8, 8' über Abläufe auf dem betreffenden Sicherheitselement 2, 2' (in Form eines Event-Mechanismus oder dergleichen) von der Entfernung des Applets
4. Das Single-Wallet 8, 8' entfernt dann die dazugehörige graphische Darstellung aus seiner internen Datenbank
5. Das Single-Wallet 8, 8' informiert zudem das übergeordnete Multi-Wallet 3 über das Entfernen des virtuellen Objektes 4, 5, 6, 7, beispielsweise eines bargeldlosen Zahlungsmittels beziehungsweise einer virtuellen Kreditkarte, so dass dieses die entsprechenden Informationen in ihrer eigenen Datenbank ändern kann.

### ● Aktivieren oder Deaktivieren eines virtuellen Objektes in einer virtuellen Brieftasche

1. Der Nutzer wählt mittels des Multi-Wallet 3 ein virtuelles Objekt, beispielsweise 4, 5, 6, 7 ein bargeldloses Zahlungsmittel beziehungsweise eine virtuelle Kreditkarte, zur Aktivierung oder Deaktivierung aus
2. Das Multi-Wallet 3 stellt über die interne Datenbank fest, mit welchem Sicherheitselement 2, 2' das betreffende virtuelle Objekt assoziiert ist
3. Das Multi-Wallet 3 selektiert dann zunächst das betreffende Sicherheitselement 2, 2', spricht dann die entsprechende von dem Sicherheitselement 2, 2' gehaltene Anwendung (Applet) an und sendet dann über die Programmierschnittstelle 10, das entsprechende Single-Wallet 8, 8' und dessen Hardwaresteuerungsschnittstelle 9 einen Befehl zur Aktivierung bzw. Deaktivierung des virtuellen Objektes 4, 5, 6, 7
4. Zudem wird das Sicherheitselement 2, 2' für die Nutzung am PoS aktiviert.

### ● Nutzung eines virtuellen Objektes an einer Akzeptanzstelle (PoS, Kartenleser)

1. Der Nutzer aktiviert zunächst das virtuelle Objekt 4, 5, 6, 7, beispielsweise ein bargeldloses das Zahlungsmittel, das er bei der folgenden Transaktion verwenden möchte.
2. Der Nutzer hält das Smartphone 1 in NFC-Reichweite an den Kartenleser einer Kasseneinrichtung (elektronisches Gerät 11 am PoS)
3. Der PoS beziehungsweise die entsprechende Kasseneinrichtung 11 selektiert die gewünschte Anwendung (Applet) auf dem gerade aktiven Sicherheitselement 2, 2' und interagiert mit dieser, um die gewünschte Transaktion durchzuführen
4. Der Nutzer entfernt sein Smartphone 1 wieder vom PoS.

### Lise der Bezugszeichen

- 1: mobiles Endgerät, zum Beispiel Smartphone
- 2: hardwarebasiertes Sicherheitselement
- 3: einheitliche Wallet-Anwendung, Multi-Wallet
- 4, 5, 6, 7: virtuelles Objekt, zum Beispiel bargeldloses Zahlungsmittel
- 8, 8': sicherheitselementspezifische Wallet-Anwendung, Single-Wallet
- 9: Hardwaresteuerungsschnittstelle
- 10: Programmierschnittstelle
- 11: elektronisches Gerät, zum Beispiel Kasseneinrichtung am PoS

## Patentansprüche

1. Verfahren für das Management mehrerer durch ein mobiles Endgerät (1) bereitgestellter "Mobile Wallets", nämlich virtueller Brieftaschen, welche unterschiedliche virtuelle Objekte (4, 5, 6, 7), wie insbesondere bargeldlose Zahlungsmittel in Form virtualisierter Kredit- und Bezahlkarten, aufnehmen sowie über diese virtuellen Objekte (4, 5, 6, 7) verfügbare Ressourcen, wie Geldbeträge, in Form sie repräsentierender Daten verwalten, die zur Ausführung bargeldloser Bezahlvorgänge oder Transaktionsvorgänge an andere hierfür ausgebildete elektronische Geräte (11) übertragbar sind, wobei jede durch das mobile Endgerät (1) bereitgestellte virtuelle Brieftasche besteht aus einem der Identifikation bei Bezahl- oder Transaktionsvorgängen dienenden, mit dem mobilen Endgerät verbunden Sicherheitselement (2, 2') und einer softwarebasierten Wallet-Anwendung (3), durch welche die virtuelle Brieftasche für die Interaktion mit einem sie verwendenden Nutzer auf dem mobilen Endgerät (1) dargestellt wird und bargeldlose Bezahlvorgänge und Transaktionsvorgänge unter Zugriff auf das zugehörige Sicherheitselement (2, 2') gesteuert werden, **dadurch gekennzeichnet, dass** alle von dem betreffenden mobilen Endgerät bereitgestellten virtuellen Brieftaschen unabhängig von dem mit ihnen jeweils verknüpften Sicherheitselement (2, 2') durch eine einheitliche softwarebasierte Wallet-Anwendung (3) dargestellt werden, welche auf das Sicherheitselement (2, 2') einer für einen Bezahl- oder Transaktionsvorgang verwendeten virtuellen Brieftasche
a) direkt über eine, bezogen auf die von dem mobilen Endgerät (1) unterstützten Sicherheitselemente (2, 2') universelle Hardwaresteuerungsschnittstelle (8) zugreift
oder
b) über eine mit einer Programmierschnittstelle (10) zu der einheitlichen Wallet-Anwendung (3) und mit einer Hardwaresteuerungsschnittstelle (9) für den Zugriff auf das Sicherheitselement (2, 2') ausgestattete, spezifisch für das betreffende Sicherheitselement (2, 2') ausgelegte Wallet-Anwendung (8, 8') zugreift.

2. Verfahren nach Anspruch 1, **dadurch gekennzeichnet, dass** Informationen zu unterschiedlichen virtuellen Brieftaschen und für deren graphische Darstellung in einer zu der einheitlichen Wallet-Anwendung (3) gehörenden Datenbank verwaltet werden, in welcher diese Informationen mit Angaben zu einem jeweiligen, von der betreffenden virtuellen Brieftasche aufgenommenen virtuellen Objekt (4, 5, 6, 7) verknüpft werden.

3. Verfahren nach Anspruch 2, **dadurch gekennzeichnet, dass** die Datenbank durch den Nutzer des mobilen Endgeräts (1) konfigurierbar, administrierbar und aktualisierbar ist.

4. Verfahren nach Anspruch 3, **dadurch gekennzeichnet, dass** das Konfigurieren, das Administrieren und Aktualisieren der Datenbank mittels des die Datenbank haltenden mobilen Endgeräts (1) durchführbar ist.
